# EUROPÄISCHE PATENTSCHRIFT

(11) **EP 1 461 168 B1**
(45) Veröffentlichungstag und Bekanntmachung des Hinweises auf die Patenterteilung: **16.04.2008**
(21) Anmeldenummer: 02802973.4
(22) Anmeldetag: 17.09.2002
(51) Int. Cl.: B09C 1/08, B01J 19/00

(54) **VERFAHREN ZUR OXIDATIVEN BEHANDLUNG VON SCHÜTTGÜTERN**
METHOD FOR THE OXIDATIVE TREATMENT OF BULK MATERIAL
PROCEDE DE TRAITEMENT OXYDATIF DE MATIERE EN VRAC

(30) Priorität: 13.11.2001 DE 10155516; 20.11.2001 DE 10156540
(43) Veröffentlichungstag der Anmeldung: 29.09.2004
(73) Patentinhaber: Gebrüder Lödige Maschinenbaugesellschaft mbH, 33102 Paderborn (DE); WEDECO Umwelttechnologie GmbH, 32051 Herford (DE)
(72) Erfinder: RIED, Dr. Achim, 32549 Bad Oeynhausen (DE); KAMPMANN, Martin, 33335 Gütersloh (DE); SPRANZEL, Frank, 33175 Bad Lippspringe (DE)
(74) Vertreter: Gille Hrabal Struck Neidlein Prop Roos
(86) Internationale Anmeldenummer: PCT/EP2002/010422
(87) Internationale Veröffentlichungsnummer: WO 2003/041882

(56) Entgegenhaltungen:
- EP-A- 0 622 130
- DE-A- 4 302 020
- DE-A- 4 302 021
- DE-A- 19 512 448
- US-A- 5 373 067

## Beschreibung

Die Erfindung betrifft ein Verfahren und eine Vorrichtung zur oxidativen Behandlung von Schüttgütern in einem Behältnis und einer mit dem Behältnis verbundenen Aufbereitungsstation, die O₂ zu einem Gasgemisch aus O₂ und O₃ aufbereitet, wobei das in das Behältnis einströmende Gasgemisch mit dem zu behandelnden Schüttgut vermischt wird und das aus dem Behältnis ausströmende Gasgemisch, soweit noch O₃-beladen, feststoffgereinigt in einer dem Behältnis nachgeschalteten Einrichtung zu O₂ reduziert wird.

Ein derartiges Verfahren ist durch die DE 195 12 448.C2 bekannt geworden.

Mit dem bekannten Verfahren wird kontaminiertes Material, insbesondere Bodenmaterialien, in einem chargenweise betriebenen Mischer mit Ozon-lonen behandelt, damit die im Bodenmaterial vorhandenen Schadstoffe abgebaut werden. Die oxidierbaren Schadstoffe werden in umweltfreundliche Komponenten wie Sauerstoff, Wasser oder Kohlendioxid zerlegt. Organische und anorganische Schadstoffe, mit denen ein Bodenmaterial verseucht ist, werden mit einer Behandlung durch Ozon-lonen, die eine verstärkte Oxidationsfähigkeit im Vergleich zu nicht-ionisierten Ozon-Molekülen aufweisen, abgebaut. Dabei wird das in einem Mischer verseuchte Bodenmaterial unter Einleitung von Ozon-lonen bewegt.

Weiterhin ist aus der DE-OS 43 02 020 ein Verfahren zur oxidativen Zerstörung von in Böden abgelagerten Substanzen bekannt, das den Boden in einem Drehreaktor mit ozonhaltigem Sauerstoff behandelt.

Aufgabe der vorliegenden Erfindung ist es, Produkteigenschaften von Schüttgütern unter Behandlung mit einem O₂/O₃-Gasgemisch gezielt so zu verändern, dass ein vorgegebener pH-Wert im mit O₂/O₃-Gasgemisch behandelten Schüttgut vorliegt und das Endprodukt auf eine vorgegebene Endfeachte zu bringen.

Die Aufgabe wird erfindungsgemäß dadurch gelöst, dass das im Behältnis zu behandelnde Schüttgut vor und/oder während der Behandlung mit dem O₂/O₃-Gasgemisch befeuchtet wird, so dass sich eine Schüttgutfeuchte von x ≤ 40% bezogen auf die Gesamtmasse des zu behandelnden Schüttgutes einstellt und dass das nach der Oxidation und/oder Depolymerisation vorliegende Endprodukt im Behältnis auf die gewünschte Endfeuchte getraknet wird.

Das erfindungsgemäße Verfahren hat damit den wesentlichen Vorteil, dass über die Feuchtigkeitszugabe der Reaktionsumfang zwischen dem O₂/O₃-Gasgemisch und dem zu behandelnden Schüttgut gezielt gesteuert werden kann. Mit dem Maß an Feuchtigkeitszugabe wird nicht nur die Oxidation, die Ketten- und/oder Ringaufspaltung von organischen Schüttgütern kontrolliert, sondern es kann auch ein pH-Wert im zu behandelnden Schüttgut vorgegeben werden, von dem aus die O₂/O₃-Gasgemischbehandlung startet. Mit der Schüttgutbefeuchtung können die einzelnen Partikel aufgequollen oder mit einem Flüssigkeitsfilm überzogen werden, was die Oxidation einzelner Elementegruppen je nach zu behandelndem Schüttgut begünstigt. Die in das zu behandelnde Schüttgut eingebrachte Feuchte kann mit dem O₂/O₃-Gasgemisch reagieren oder die Reaktion mit dem Schüttgut selbst gezielt unterstützen.

Grenzflächenreaktionen werden positiv beeinflusst und einzelne Partikel des Schüttguts werden für die Oxidation mit dem O₂/O₃-Gasgemisch besser zugänglich. Eine gezielte Reaktionsführung ist möglich.

Feuchtigkeit wird einem zu behandelnde Schüttgut nur in dem Umfang zugegeben, wie es ein fluidisierbares, rieselfähiges Schüttgutverhalten zumindest ansatzweise behält. Das zu behandelnde Schüttgut wird in einem Mischer so intensiv bewegt, dass die befeuchteten oder eine bestimmte Feuchtigkeit aufweisenden Schüttgutpartikel bestmöglich mit dem in den Mischer eingeleiteten O₂/O₃-Gasgemisch in Berührung kommen und die gewünschte Reaktion ablaufen kann. Das zu behandelnde Schüttgut, wie beispielsweise Stärke, Kakaobruch, Kaolin oder Holzschliff wird nur so stark vor und/oder während der O₂/O₃-Gasgemischbehandlung befeuchtet, wie dies für die gewünschte Reaktionsführung notwendig ist. Mit dem erfindungsgemäßen Verfahren kann sehr effektiv innerhalb kürzester Reaktionszeiten, die zwischen einer Minute und 60 Minuten liegen, eine pH-Wertveränderung gezielt herbeigeführt werden, beispielsweise bei Stärke von pH 5,5 auf pH 3,0, die Hydrophilität kann verstärkt werden, das Löslichkeitsverhalten in Abhängigkeit von der Temperatur kann verändert, beispielsweise abgesenkt werden, und eine Viskositätsveränderung, beispielsweise eine Viskositätserniedrigung bei konstantem Feststoffgehalt in einer Lösung kann erreicht werden. Die Bewegung des zu behandlenden Schüttguts im Mischer kann mit verschiedensten Mischelementen erfolgen und das Mischbehältnis kann dabei weitgehend horizontal, schräg zur Horizontalebene oder vertikal ausgerichtet sein. Das erfindungsgemäße Verfahren ist für den Chargenbetrieb, den quasi-kontinuierlichen Betrieb und den kontinuierlichen Betrieb geeignet.

Bei anderen Schüttgütern wird mit dem Maß der Befeuchtung vor und/oder während der O₂/O₃-Gasgemischbehandlung die Produktempfindlichkeit eines zu behandelnden Schüttguts gegen das O₂/O₃-Gasgemisch verstärkt oder abgeschwächt. Alkoholgruppen werden gezielt in Säuregruppen umgebaut, das behandelte Endprodukt wird gewünscht polarer gestaltet, oder in Naturstoffen vorkommende Verbindungen werden oxidiert, so dass mit dem erfindungsgemäßen Verfahren behandelte Schüttgüter eine geringere Farbtönung aufweisen und sich bei hoher Konzentration in einer Lösung eine verringerte Viskosität einstellt. Es lassen sich beispielsweise in Abhängigkeit von der Feuchte vor und/oder während der O₂/O₃-Gasgemischbehandlung in einem Schüttgut vorhandene Mikroorganismen inaktivieren. Das erfindungsgemäße Verfahren zeichnet sich dadurch aus, dass durch den im Behältnis sichergestellten großen Gas-Feststoffaustausch eine hohe Umsetzung von Ozon sichergestellt ist. In das zu behandelnde Schüttgut eingeleitetes Ozon wird zu 70-100%, je nach Schüttgut und Prozessführung, umgesetzt, so dass im Abgas nur noch geringste Ozonanteile zu O₂ reduziert werden müssen, bevor das Gas belastungsfrei an die Atmosphäre abgegeben werden kann.

In weiterer Ausgestaltung des erfindungsgemäßen Verfahrens wird das zu behandelnde Schüttgut vor und/oder während der Behandlung mit dem O₂/O₃-Gasgemisch gekühlt oder erwärmt.

Dies hat den Vorteil, dass bei einem Reaktionsablauf die Temperatur im zu behandelnden Schüttgut gezielt beeinflusst werden kann. Gewünschte Prozessführungen lassen sich dadurch einfacher erreichen, die Reaktionseffektivität ist beeinflussbar und selektive Reaktionsschritte lassen sich begünstigen. Bei exothermen Reaktionen kann durch eine Kühlung die Reaktionstemperatur im zu behandelnden Schüttgut während der O₂/O₃-Gasgemischbehandlung konstant gehalten werden.

In weiterer Ausgestaltung des erfindungsgemäßen Verfahrens wird das zu behandelnde Schüttgut mit Wasser oder einer wässrigen Lösung, wie beispielsweise Essigsäure oder Natronlauge befeuchtet.

Dies hat den Vorteil, dass bestimmte Reaktionsschritte während der O₂/O₃-Gasgemischbehandlung begünstigt oder verzögert werden können. Es lassen sich unterschiedliche Produkteigenschaften erzielen, wenn man beispielsweise eine Stärkebehandlung mit dem O₂/O₃-Gasgemisch bei pH 5,5 oder pH 7 startet oder die Stärke vor der O₂/O₃-Gasgemischbehandlung mehr oder weniger stark mit H₂O aufquillt.

Mit dem erfindungsgemäßen Verfahren werden natürliche Stoffanteile des zu behandelnden Schüttguts und/oder das zu behandelnde Schüttgut selbst oxidiert und/oder depolymerisiert. Dies hat den Vorteil, dass das mit dem O₂/O₃-Gasgemisch behandelte Schüttgut neue Produkteigenschaften aufweist, die das unbehandelte Schüttgut noch nicht kennzeichnet. So kann das mit dem erfindungsgemäßen Verfahren behandelte Schüttgut in Anwendungsprozessen eingesetzt werden, die beispielsweise ein vollkommenes Löslichkeitsverhalten bei erniedrigten Temperaturen zwingend fordern.

Weiterhin wird in einer Ausführungsform des erfindungsgemäßen Verfahrens das zu behandelnde Schüttgut im Behältnis unter einem Druck von p ≥ 1 bar mit dem O₂/O₃-Gasgemisch vermischt. Dies hat den Vorteil, dass eine größere Umsetzung von O₃ im zu behandelnden Schüttgut erreicht wird.

Vorteilhafterweise wird die Oxidation und/oder Depolymerisation des zu behandelnden Schüttguts gesteuert und/oder geregelt, indem der in das Behältnis ein- und ausströmende Ozonanteil im Gasgemisch kontinuierlich oder in bestimmten Zeitintervallen ermittelt wird. Dies hat den Vorteil, dass der Ozonanteil im Gasgemisch bestmöglich für die Reaktion mit dem zu behandelnden Schüttgut ausgenutzt werden kann, und gleichzeitig kann die Behandlungszeit bestimmt werden, nach der das behandelte Schüttgut die gewünschten vorgegebenen Produkteigenschaften aufweist.

Vorteilhafterweise werden die für das mit dem O₂/O₃-Gasgemisch behandelte Schüttgut vorgegebenen Produkteigenschaften über die Erfassung der Schüttgutfeuchte gesteuert und/oder geregelt. Dies hat den Vorteil, dass mit der Erfassung eines einfachen Prozessparameters die Behandlung eines Schüttguts mit dem O₂/O₃-Gasgemisch überwacht und überprüft werden kann.

Ein weiterer Prozessparameter ist die Variation der Ozonkonzentration im O_{2/}O₃-Gasgemisch und/oder die Verweildauer des O₂/O₃-Gasgemisches im Behältnis.

Dies hat den Vorteil, dass die Produktempfindlichkeit des zu behandelnden Schüttgutes generell und insbesondere gegen Ozon berücksichtigt werden kann. Produktqualitäten lassen sich steigern, und die für die Behandlung notwendige Ozonmenge lässt sich optimieren, d. h., minimieren.

Besonders vorteilhaft ist es, wenn das Behältnis mit einem Produktfüllungsgrad von 10-80% betrieben wird. Dies hat den Vorteil, dass das zu behandelnde Schüttgut in einem Behältnis intensiv bewegt werden kann, so dass die benötigten Platzwechsel der einzelnen Partikel für eine homogene gleichmäßige Befeuchtung wie auch für den Kontakt mit dem O₂/O₃-Gasgemisch sichergestellt ist. Nur durch den intensiven Austausch von Flüssigkeit, Gas mit dem zu behandelnden Schüttgut lassen sich die Einsatzmengen von Flüssigkeit und Gas minimieren und die Reaktionszeiten zwischen Feststoff und Gas verkürzen.

Bevorzugt wird die Oxidation und/oder Depolymerisation des zu behandelnden Schüttguts in einem chargenweise und/oder kontinuierlich arbeitenden Pflugscharmischer durchgeführt. Dies hat den Vorteil, dass man das zu behandelnde Schüttgut in diesen Maschinen sowohl im Haufwerk, im mechanisch erzeugten Wirbelbett oder im Mischgutring bewegen kann. Sowohl eine homogene gleichmäßige Befeuchtung eines Schüttguts ist in diesen Maschinen möglich, wie auch die Behandlung des Schüttguts mit dem O₂/O₃-Gasgemisch.

Besonders effektiv ist es, wenn man das O₂/O₃-Gasgemisch und die Flüssigkeit, bestehend aus H₂O oder einer wässrigen Lösung, im unteren Teil des Behältnisses gleichzeitig oder zeitversetzt in das zu behandelnde Schüttgut einleitet. Dies hat den Vorteil, dass sowohl die Flüssigkeit wie auch das O₂/O₃-Gasgemisch intensiv mit dem zu behandelnden Schüttgut in Kontakt gebracht werden kann. Lokale Konzentrationsverstärkungen lassen sich zuverlässig vermeiden und größere Agglomerationen können ausgeschlossen werden.

Das nach der Oxidation und/oder Depolymerisation vorliegende Endprodukt wird im Behältnis auf die gewünschte Endfeuchte getrocknet. Dies hat den Vorteil, dass für die Erreichung eines gewissen Endproduktes mit einer vorgegebenen Restfeuchte keine weitere Apparatur notwendig ist, um das mit dem O₂/O₃-Gasgemisch behandelte Schüttgut zu trocknen. Ebenfalls kann die Korngrößenverteilung des angestrebten Endprodukts durch die Variation der im Behältnis beweglich gelagerten Mischelemente und/oder durch zusätzlich im Behältnis hochtourig rotierende Misch-, Schneid- und/oder Agglomerationselemente eingestellt werden. Dies hat den Vorteil, dass man Produktvariationen in einem weiten Bereich in Verbindung mit dem erfindungsgemäßen Verfahren und den damit bevorzugt eingesetzten Maschinen erreichen kann.

Weitere Vorteile und Anwendungsmöglichkeiten der vorliegenden Erfindung ergeben sich aus der nachfolgenden Figurenbeschreibung, die eine Verfahrensmöglichkeit beispielsweise beschreibt.

In dem stark schematisierten Verfahrensfließbild ist mit 10 ein Anlagenaufbau zum oxidativen Behandlung von Schüttgütern gezeigt. Das zu behandelnde Schüttgut 11 wird in einen Pflugscharmischer 12 in Pfeilrichtung 13 über den Produkteintragstutzen 14 eingebracht. Der Produktinnenraum des Pflugscharmischers 12 ist von einer Mischerwelle 15 durchsetzt, auf der Mischelemente 16, hier Pflugscharschaufeln, angebracht sind. Die Mischelemente 16 sind auf der Mischerwelle 15 derart angebracht, dass sie ein zu behandelndes Schüttgut 11 im Mischraum vollständig ohne Totraumzonen bewegen können. Die Mischelemente werden über die Mischerwelle 15 in Pfeilrichtung 17 gedreht und tauchen so ständig in das zu behandelnde Schüttgut 11 ein, das sich im Pflugscharmischer 12 befindet.

Über die Flüssigkeitszugabe 18 kann das zu behandelnde Schüttgut 11 im Pflugscharmischer 12 befeuchtet werden. Als Flüssigkeitszugabe 18 wird häufig eine Lanze mit einer Düse eingesetzt, die die einzubringende Flüssigkeit versprüht. Die Flüssigkeit wird im vorliegenden Anlagenaufbau in den Bereich von hochtourig drehenden Produktverteilungselementen 19 gesprüht, die sicherstellen, dass die zugeführte Flüssigkeit homogen und gleichmäßig ohne Agglomerationsbildung im zu behandelnden Schüttgut 11 verteilt wird. Sowohl die Produktverteilungselemente 19 wie auch die Mischerwelle 15 werden motorisch gegebenenfalls unter Zwischenschaltung eines Getriebes angetrieben.

Ein O₂/O₃-Gasgemisch 20 wird in Pfeilrichtung 21 über ein Zugaberohr 22 in das feuchtigkeitsbeladene zu behandelnde Schüttgut 11 eingeführt. Das O₂/O₃-Gasgemisch wird in einem Ozongenerator 23 hergestellt, der beispielsweise von O₂-Sauerstoffflaschen gespeist wird. In einem ersten Gaskonzentrationmessgerät 24 wird der Ozongasanteil im O₂/O₃-Gasgemisch bestimmt, so dass eine gezielte Ozonbehandlung des zu behandelnden Schüttgutes 11 im Pflugscharmischer 12 möglich ist. Weiterhin wird der Volumenstrom pro Zeiteinheit erfasst, mit dem das O₂/O₃-Gasgemisch in den Pflugscharmischer 12 einströmt. Das zu behandelnde Schüttgut 11 wird so lange im Pflugscharmischer 12 behandelt, bis die gewünschten Produkteigenschaften vorliegen, die mit der O₂/O₃-Gasgemischbehandlung erreicht werden sollen. In einer Abgasleitung, die direkt mit dem Produktinnenraum des Pflugscharmischers 12 in Verbindung steht, ist ein Druckmessgerät 25 vorgesehen, über das der Prozessdruck im Pflugscharmischer 12 erfasst und gesteuert werden kann. Der Pflugscharmischer 12 ist so ausgelegt, dass er das zu behandelnde Schüttgut 11 im Pflugscharmischer 12 sowohl unter einem erhöhten Druck als auch unter einem erniedrigten Druck, bezogen auf den Umgebungsdruck, bewegen, d.h. hier intensiv vermischen kann. Der Pflugscharmischer 12 ist weiterhin so ausgelegt, dass kein Ozon an die Umgebung austreten kann, so lange das zu behandelnde Schüttgut 11 mit dem O₂/O₃-Gasgemisch 20 behandelt wird.

In einer Abgasleitung 26 mit nicht gezeigten Vorrichtungen zur Staubabscheidung, wie Zyklone bzw. Filter wird das ausströmende O₂/O₃-Gasgemisch von einem zweiten Gaskonzentrationmessgerät 27 erfasst. In dem zweiten Gaskonzentrationmessgerät 27 wird der im Abgas vorhandene Ozonanteil bestimmt. In einer Reduzierungseinheit von O₃-Anteilen zu O₂-Gasanteilen 28 werden die im zweiten Gaskonzentrationmessgerät 27 bestimmten Ozon-Anteile in O₂-Anteile reduziert. In einem dritten Gaskonzentrationmessgerät 29 wird nochmals überprüft, ob der nunmehr vorliegende Gasstrom ozonfrei ist. Ist der vorliegende Gasstrom ozonfrei, so kann er in Pfeilrichtung 30 in die Atmosphäre ausströmen. In der Umgebung der Anlage 10 können mehrere O₃-Überwachungssensoren angeordnet sein, die erhöhte Ozonwerte in der Umgebung der Anlage erfassen können. Wird eine maximal vorgegebene Konzentration von Ozon in der die Anlage umgebenden Atmosphäre gemessen, so schaltet der Ozongenerator 23 ab, und es wird eine Störungsmeldung angezeigt.

Der Pflugscharmischer 12 wird mit dem zu behandelnden Schüttgut 11 so befüllt, dass ein Freiraum 31 im Pflugscharmischer verbleibt, in den das zu behandelnde Schüttgut bewegt bzw. geschleudert werden kann, damit eine große Partikelbeweglichkeit im Mischraum des Pflugscharmischers 12 möglich ist. Über eine derartige Bewegung wird ein großer Stoffaustausch zwischen Feststoff, Flüssigkeit und Gas sichergestellt. Über einen Temperaturmessfühler 32 kann die Produkttemperatur des zu behandelnden Schüttgutes 11 während der gesamten Behandlungszeit mit dem O₂/O₃-Gasgemisch 20 erfasst werden. Am Pflugscharmischer 12 ist eine Mantelheizung bzw. Mantelkühlung 33 vorgesehen, über die das zu behandelnde Schüttgut 11 gekühlt bzw. beheizt werden kann. Ist die gewünschte Oxidation bzw. Depolymerisation des zu behandelnden Schüttgutes 11 abgeschlossen, so kann es über den Produktaustragstutzen 34 in Pfeilrichtung,35 aus dem Pflugscharmischer 12 abgezogen werden. Zuvor wird das behandelte Schüttgut 11 im Pflugscharmischer 12 auf eine gewünschte Restfeuchte getrocknet.

Das zu behandelnde Schüttgut 11 kann mit dem erfindungsgemäßen' Verfahren sowohl chargenweise wie auch kontinuierlich behandelt werden. Wird ein Schüttgut kontinuierlich mit dem erfindungsgemäßen Verfahren behandelt, so strömt das zu behandelnde Schüttgut einen Ends in den dafür vorgesehenen Pflugscharmischer ein und verlässt den Pflugscharmischer anderen Ends. Das kontinuierlich aus dem Pflugscharmischer ausströmende Schüttgut weist die gewünschten Produkteigenschaften auf und ist in dem dafür vorgesehenen Umfang oxidiert bzw. depolymerisiert. Die Produktzuführungs- und -abführungsorgane für den Pflugscharmischer sind so ausgelegt, dass sie das zu behandelnde Schüttgut ein- und austragen können, ohne dass das im Pflugscharmischer befindliche O₂/O₃-Gasgemisch entweichen kann.

Die oxidative Behandlung von Schüttgütern in einem Behältnis erfolgt dadurch, dass in das Behältnis das zu behandelnde Schüttgut eingebracht wird ,und in dem Behältnis wird das zu behandelnde Schüttgut so weit mit Wasser oder einer wässrigen Lösung befeuchtet, dass es mit einem O₂/O₃-Gasgemisch so behandelt werden kann, dass das angestrebte Endprodukt einen bestimmten pH-Wert oder eine bestimmte Löslichkeit oder eine bestimmte Polarität oder ein bestimmtes Löslichkeitsverhalten und/oder Korngrößenverteilung aufweist. Mit dem erfindungsgemäßen Verfahren lassen sich mit geringsten Mengen von Ozon in einem O₂/O₃-Gasgemisch Schüttgüter sehr effektiv oxidieren, so dass 70-100% der zur Verfügung gestellten Ozon-Anteile umgesetzt werden.

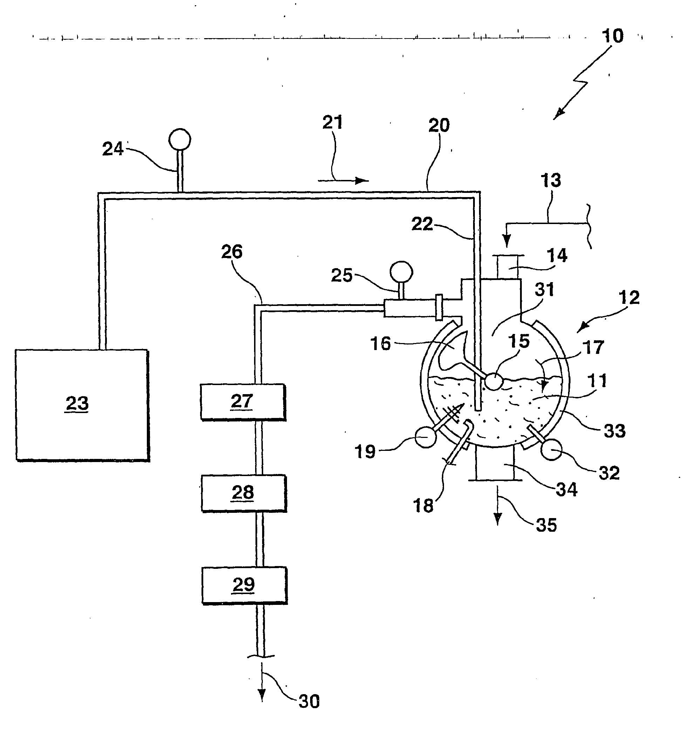

## Patentansprüche

1. Oxidative Behandlung von Schüttgütern in einem Behältnis und einer mit dem Behältnis verbundenen Aufbereitungsstation, die O₂ zu einem Gasgemisch aus O₂ und O₃ aufbereitet, wobei das in das Behältnis einströmende Gasgemisch mit dem zu behandelnden Schüttgut vermischt wird und das aus dem Behältnis ausströmende Gasgemisch, so weit noch O₃-beladen, feststoffgereinigt in einer dem Behältnis nachgeschalteten Einrichtung zu O₂ reduziert wird,
dass das im Behältnis zu behandelnde Schüttgut vor und/oder während der Behandlung mit dem O₂/O₃-Gasgemisch befeuchtet wird, so dass sich eine Schüttgutfeuchte von x ≤ 40% bezogen auf die Gesamtmasse des zu behandelnden Schüttguts einstellt und
**dadurch gekennzeichnet,**
**dass** das noch der Oxidation und/oder Depolymerisation vorliegende Endprodukt im Behältnis auf die gewünschte Endfeuchte getrocknet wird.

2. Verfahren nach Anspruch 1, **dadurch gekennzeichnet, dass** das zu behandelnde Schüttgut vor und/oder während der Behandlung mit dem O₂/O₃-Gasgemisch gekühlt oder erwärmt wird.

3. Verfahren nach Anspruch 1 oder 2, **dadurch gekennzeichnet, dass** das zu behandelnde Schüttgut mit Wasser oder einer wässrigen Lösung, wie beispielsweise Essigsäure oder Natronlauge, befeuchtet wird.

4. Verfahren nach einem der Ansprüche 1-3, **dadurch gekennzeichnet, dass** natürliche Stoffanteile des zu behandelnden Schüttguts und/oder das zu behandelnde Schüttgut selbst oxidiert und/oder depolymerisiert werden.

5. Verfahren nach einem der Ansprüche 1-4, **dadurch gekennzeichnet, dass** das zu behandelnde Schüttgut im Behältnis unter einem Druck von p ≥ 1 bar mit dem O₂/O₃-Gasgemisch vermischt wird.

6. Verfahren nach einem der Ansprüche 1-5, **dadurch gekennzeichnet, dass** die Oxidation und/oder Depolymerisation des zu behandelnden Schüttguts gesteuert und/öder geregelt wird, indem der in das Behältnis ein- und ausströmende O₃-Anteil im Gasgemisch kontinuierlich oder in bestimmten Zeitintervallen ermittelt wird.

7. Verfahren nach einem der Ansprüche 1-6, **dadurch gekennzeichnet, dass** die mit der O₂/O₃-Gasgemischbehandlung im Schüttgut erzielten Produkteigenschaften über die Erfassung der Schüttgutfeuchte gesteuert und/oder geregelt werden.

8. Verfahren nach einem der Ansprüche 1-7, **dadurch gekennzeichnet, dass** die Ozon-Konzentration im in das Behältnis einströmenden O₂/O₃ Gasgemisch und/oder die Verweildauer des O₂/O₃-Gasgemisches im Behältnis variiert werden.

9. Verfahren nach einem der Ansprüche 1-8, **dadurch gekennzeichnet, dass** das Behältnis mit einem Produktfüllungsgrad von 10-80% betrieben wird.

10. Verfahren nach einem der Ansprüche 1-9, **dadurch gekennzeichnet, dass** die Oxidation und/oder Depolymerisation des zu behandelnden Schüttguts in einem chargenweise oder kontinuierlich arbeitenden Pflugscharmischer durchgeführt wird.

11. Verfahren nach einem der Ansprüche 1-10, **dadurch gekennzeichnet, dass** das O₂/O₃-Gasgemisch und die Flüssigkeit bestehend aus H₂O oder einer wässrigen Lösung gleichzeitig und/oder zeitversetzt im unteren Teil des Behältnisses in das zu behandelnde Schüttgut eingebracht werden.

12. Verfahren nach einem der Ansprüche 1-11, **dadurch gekennzeichnet, dass** die Korngrößenverteilung des angestrebten Endprodukts durch die Variation der im Behältnis beweglich gelagerten Mischelemente und/oder durch zusätzlich im Behältnis hochtourig rotierende Misch-, Schneid- und/oder Agglomerationselemente eingestellt wird.

13. Vorrichtung für die oxidative Behandlung von Schüttgütern
- mlt einem Behältnis für eine oxidative Behandlung von Schüttgütern und
- mit einer mit dem Behältnis verbundenen Aufbereitungsstation für die Aufbereitung von O₂ zu einem Gasgemisch aus O₂ und O₃,
- das Behältnis ist als Pflugscharmischer ausgestaltet, um das in das Behältnis einströmende Gasgemisch mit dem zu behandelnden Schüttgut zu vermischen,
- mit einer dem Behältnis nachgeschalteten Einrichtung, um das aus dem Behältnis ausströmende Gasgemisch, so weit noch O₃-beiaden, feststoffgereinigt zu O₂ reduzieren,
die Vorrichtung Mittel umfasst, um das im Behältnis zu behandelnde Schüttgut vor und/oder während der Behandlung mit dem O₂/O₃-Gasgemisch zu befeuchten, so dass eine Schüttgutfeuchte von x ≤ 40% bezogen auf die Gesamtmasse des zu behandelnden Schüttguts einstellbar ist,
**dadurch gekennzeichnet, dass**
und eine Mantelheizung bzw, Mantelkühlung (33) vorgesehen ist, mit der das nach der Oxidation und/ oder Depolymerisation vorliegende Endprodukt im Behältnis auf die gewünschte Endfeuchte getrocknet werden kann.

## Claims

1. Oxidative treatment of bulk materials in a container and a pre-processing stage connected with the container, the pre-processing stage pre-processing O₂ into a gas mixture of O₂ and O₃, wherein the gas mixture flowing into the container is mixed with the bulk material to be treated and the gas mixture flowing out of the container, cleaned of solids, is reduced to O₂ in a device disposed downstream of the container if still charged with O₃
wherein the bulk material to be treated in the container is moistened prior to and/or during the treatment with the O₂/O₃ gas mixture so that the result is a bulk material moisture of x ≤ 40% relative to the total mass of the bulk material to be treated,
**characterized in that**
the final product present after the oxidization and/or depolymerization is dried to the desired final moisture in the container.

2. Method according to Claim 1, **characterized in that** the bulk material to be treated is cooled or heated prior to and/or during the treatment with the O₂/O₃ gas mixture.

3. Method according to Claim 1 or 2, **characterized in that** the bulk material to be treated is moistened with water or an aqueous solution such as, for example, acetic acid or sodium hydroxide solution.

4. Method according to one of the Claims 1 to 3, **characterized in that** natural substance components of the bulk material to be treated and/or the bulk material to be treated itself are oxidized and/or depolymerized.

5. Method according to one of the Claims 1 to 4, **characterized in that** the bulk material to be treated is mixed in the container with the O₂/O₃ gas mixture under a pressure of p≥ 1 bar.

6. Method according to one of the Claims 1 to 5, **characterized in that** the oxidation and/or depolymerization of the bulk material to be treated is controlled and/or regulated by the O₃ moiety in the gas mixture flowing into or out of the container being determined continuously or in certain time intervals.

7. Method according to one of the Claims 1 to 6, **characterized in that** the product properties attained in the bulk material by the O₂/O₃ gas mixture treatment are controlled and/or regulated by the determination of the bulk material moisture.

8. Method according to one of the Claims 1 to 7, **characterized in that** the ozone concentration in the O₂/O₃ gas mixture flowing into the container and/or the residence time of the O₂/O₃ gas mixture in the container are varied.

9. Method according to one of the Claims 1 to 8, **characterized in that** the container is operated with a product filling level of 10 to 80%.

10. Method according to one of the Claims 1 to 9, **characterized in that** the oxidation and/or polymerization of the bulk material to be treated is carried out in a ploughshare mixer working batchwise or continuously.

11. Method according to one of the Claims 1 to 10, **characterized in that** the O₂/O₃ gas mixture and the liquid consisting of H₂O or an aqueous solution are introduced, simultaneously and/or with a delay in time, into the bulk material to be treated in the lower part of the container.

12. Method according to one of the Claims 1 to 11, **characterized in that** the grain size distribution of the intended final product is set by the variation of the mixing elements that are movably supported in the container and/or by mixing, cutting and/or agglomerating elements additionally rotating at high speed in the container.

13. Apparatus for the oxidative treatment of bulk materials
- comprising a container for an oxidative treatment of bulk materials and
- a pre-processing stage connected with the container, for pre-processing O₂ into a gas mixture of O₂ and O₃,
- the container is developed as a ploughshare mixer in order to mix the gas mixture flowing into the container with the bulk material to be treated,
- comprising a device disposed downstream of the container for reducing the gas mixture flowing out of the container, cleaned of solids, to O₂ if still charged with O₃,
the apparatus comprising means for moistening the bulk material to be treated in the container prior to and/or during the treatment with the O₂/O₃ gas mixture so that a bulk material moisture of x ≤ 40% relative to the total mass of the bulk material to be treated can be set,
**characterized in that**
a jacket heating system or jacket cooling system (33) is provided by means of which the final product present after the oxidation and/or polymerization can be dried to the desired final moisture in the container.

## Revendications

1. Traitement de marchandises en vrac par oxydation dans un récipient et dans un poste de traitement relié au récipient qui traite le O₂ pour obtenir un mélange gazeux de O₂ et de O₃, le mélange gazeux introduit dans le récipient étant mélangé avec la marchandise en vrac qui doit être traitée et le mélange gazeux s'écoulant à partir du récipient, libéré des substances solides pour autant qu'il contienne encore du O₃, est soumis à une réduction dans un dispositif monté à la suite du récipient, pour obtenir du O₂, la marchandise en vrac à traiter dans le récipient étant humidifiée avant et/ou ou pendant le traitement avec le mélange gazeux O₂/O₃ de telle sorte que l'on règle une humidité de la marchandise en vrac de x ≤ 40 % rapportée à la masse totale, **caractérisé en ce que** le produit fini présent dans le récipient après l'oxydation et/ou la dépolymérisation est séché pour obtenir l'humidité finale désirée.

2. Procédé selon la revendication 1, **caractérisé en ce qu'**on refroidit ou on réchauffe la marchandise en vrac qui doit être traitée, avant et/ou pendant le traitement avec le mélange gazeux O₂/O₃.

3. Procédé selon la revendication 1 ou 2, **caractérisé en ce qu'**on humidifie la marchandise en vrac qui doit être traité, avec de l'eau ou avec une solution aqueuse, comme par exemple de l'acide acétique ou de la lessive de soude.

4. Procédé selon l'une quelconque des revendications 1 à 3, **caractérisé en ce qu'**on soumet à une oxydation et/ou à une dépolymérisation, les fractions de substances naturelles de la marchandise en vrac qui doit être traitée et/ou la marchandise en vrac elle-même qui doit être traitée.

5. Procédé selon l'une quelconque des revendications 1 à 4, **caractérisé en ce qu'**on mélange la marchandise en vrac qui doit être traitée, dans le récipient, sous une pression de p ≥ 1 bar avec le mélange gazeux O₂/O₃.

6. Procédé selon l'une quelconque des revendications 1 à 5, **caractérisé en ce qu'**on commande et/ou on règle l'oxydation et/ou la dépolymérisation de la marchandise en vrac qui doit être traitée en déterminant en continu ou par intervalles de temps déterminé, la fraction de O₃ dans le mélange gazeux, que l'on introduit et qui s'évacue.

7. Procédé selon l'une quelconque des revendications 1 à 6, **caractérisé en ce qu'**on commande et/ou on règle les propriétés du produit que l'on obtient avec le traitement de la marchandise en vrac avec le mélange gazeux O₂/O₃ en enregistrant l'humidité de la marchandise en vrac.

8. Procédé selon l'une quelconque des revendications 1 à 7, **caractérisé en ce qu'**on fait varier la concentration d'ozone dans le mélange gazeux O₂/O₃ que l'on introduit dans le récipient et/ou le temps de séjour du mélange gazeux O₂/O₃ dans le récipient.

9. Procédé selon l'une quelconque des revendications 1 à 8, **caractérisé en ce qu'**on met en service le récipient avec un degré de remplissage du produit s'élevant de 10 à 80 %.

10. Procédé selon l'une quelconque des revendications 1 à 9, **caractérisé en ce qu'**on met en oeuvre l'oxydation et/ou la dépolymérisation de la marchandise en vrac qui doit être traitée dans un mélangeur à soc de charrue travaillant en discontinu et/ou en continu.

11. Procédé selon l'une quelconque des revendications 1 à 10, **caractérisé en ce qu'**on introduit le mélange gazeux O₂/O₃ et le liquide, constitué par de l'eau ou par une solution aqueuse, via la partie inférieure du récipient, de manière simultanée ou de manière décalée dans le temps, dans la marchandise en vrac qui doit être traitée.

12. Procédé selon l'une quelconque des revendications 1 à 11, **caractérisé en ce qu'**on règle la distribution granulométrique du produit fini recherché en faisant varier les éléments de mélange montés en mouvement dans le récipient et/ou en prévoyant en plus dans le récipient des éléments de mélange, de coupe et/ou d'agglomération qui tournent à grande vitesse.

13. Dispositif pour le traitement de marchandises en vrac par oxydation comprenant
- un récipient pour un traitement par oxydation de la marchandise en vrac, et
- un poste de traitement relié au récipient pour le traitement du O₂ afin d'obtenir un mélange gazeux de O₂ et de O₃,
- le récipient est réalisé sous la forme d'un mélangeur à soc de charrue pour mélanger le mélange gazeux que l'on introduit dans le récipient avec la marchandise en vrac qui doit être traitée,
- un dispositif monté à la suite du récipient destiné à réduire en O₂ le mélange gazeux qui s'évacue du récipient, libéré des substances solides pour autant qu'il contienne encore du O₃,
- le dispositif comprenant des moyens pour humidifier la marchandise en vrac qui doit être traitée dans le récipient avant et/ou ou pendant le traitement avec le mélange gazeux O₂/O₃ de telle sorte que l'on peut régler une humidité de la marchandise en vrac de x ≤ 40 % rapportée à la masse totale,
**caractérisé en ce que** l'on prévoit un chauffage à l'aide d'une enveloppe, respectivement un refroidissement à l'aide d'une enveloppe (33), avec lequel le produit fini présent dans le récipient après l'oxydation et/ou la dépolymérisation peut être séché pour obtenir l'humidité finale désirée.
